# FASCICULE DE BREVET EUROPEEN

(11) **EP 0 345 134 B1**
(45) Date de publication et mention de la délivrance du brevet: **15.12.1993**
(21) Numéro de dépôt: 89401452.1
(22) Date de dépôt: 29.05.1989
(51) Int. Cl.: B60J 10/02, B29C 47/06

(54) **Procédé de préparation d'un vitrage automobile prêt à monter**
Vorbereitungsverfahren für Direktfahrzeugsverglasung
Process for producing a motor vehicle glazing ready to be installed

(30) Priorité: 03.06.1988 DE 3818930
(43) Date de publication de la demande: 06.12.1989
(60) Demande divisionnaire: 93101256.1
(73) Titulaire: SAINT-GOBAIN VITRAGE INTERNATIONAL, 92400 Courbevoie (FR); VEGLA VEREINIGTE GLASWERKE, D-52066 Aachen (DE)
(72) Inventeur: Kunert, Heinz, D-5000 Köln 41 (DE)
(74) Mandataire: de Toytot, Robert

(56) Documents cités:
- EP-A- 0 258 128
- EP-A- 0 312 496
- DE-A- 3 323 006
- US-A- 3 715 256

## Description

La présente invention concerne un procédé de préparation d'un vitrage, en particulier un vitrage automobile, en vue de son montage dans un cadre de baie par collage de la zone marginale du vitrage à une aile de fixation du cadre de baie, dans lequel au moins deux cordons partiels de colle de section transversale calibrée sont déposés sur le vitrage, chaque fois par extrusion d'une masse de colle à l'aide d'une buse d'extrusion calibrée, un des cordons partiels étant déjà durci lors de la mise en place du vitrage dans le cadre de baie tandis que l'autre cordon partiel constitue le cordon de colle actif pour la fixation du vitrage dans ledit cadre. Un tel procédé est du type divulgué, par exemple, par EP-A-0 121 481.

Le document DE-A-33 23 006 décrit un vitrage comportant un profil composé de deux cordons dont l'un possède une lèvre qui déborde vers l'extérieur. Cette lèvre permet essentiellement de former, lors du montage du vitrage dans une baie de carrosserie, un canal permettant l'évacuation de l'eau provenant du toit.

Par contre, elle ne possède pas les propriétés mécaniques lui permettant de positionner le vitrage lors de son montage.

D'autre part, les cordons sont des éléments préfabriqués qui sont collés sur le vitrage. Ce document ne concerne pas des cordons de colle déposés par extrusion sur le vitrage.

Dans les procédés de dépôt connus comme celui du document EP-A-0 121 481 un premier cordon partiel de colle est déjà appliqué sur le vitrage dans la verrerie ou à un moment quelconque avant le montage dans la carrosserie du véhicule. Ceci supprime, dans la chaîne de montage des véhicules, les opérations nécessaires pour nettoyer et apprêter les vitrages, ce qui, au niveau de la chaîne de montage elle-même, représente une simplification notable. Un autre avantage significatif de ce procédé réside dans le fait qu'à l'aide de ce premier cordon partiel de colle, des pièces du cadre de structure, comme par exemple des moulures, des couvre-joints profilés, des bordures d'entretoisement ou des fils de déchirure peuvent être préalablement fixés à demeure au vitrage. De cette façon, d'autres opérations, qui sans cela devraient être effectuées directement sur la chaîne de montage, peuvent l'être par avance et à un moment quelconque, et, de ce fait, les opérations sur la chaîne de montage elle-même se trouvent nettement simplifiées.

Dans le cas du procédé connu, le cordon de colle de montage est appliqué immédiatement avant la mise en place du vitrage dans le cadre de la baie sur le cordon partiel durci ou sur l'aile de fixation dudit cadre, c'est-à-dire directement sur la chaîne de montage des véhicules automobiles.

L'invention a pour but de développer ce procédé connu de telle façon que ses avantages restent maintenus dans leur totalité, mais qu'une simplification supplémentaire soit réalisée pour le constructeur automobile au niveau de la chaîne de montage.

L'invention, telle que définie dans la revendication 1, réside dans le fait que les cordons partiels de colle sont déposés sur le vitrage au cours d'une seule opération d'extrusion et qu'un traitement différencié des deux cordons partiels de colle garantit qu'au moins un cordon partiel durcisse en un temps aussi bref que possible, tandis qu'un autre cordon partiel (cordon de colle de montage) reste plastiquement déformable et adhésif pendant un temps aussi long que possible.

Grâce au procédé conforme à l'invention, par rapport au procédé connu, on fait l'économie complète de l'opération consistant à appliquer séparément le cordon de colle de montage, ce qui jusqu'à présent s'effectuait directement sur la chaîne de montage. Cette seconde opération est au contraire couplée à l'opération dite de préenduction, c'est-à-dire l'application du premier cordon partiel de colle, mais suivant l'invention, les cordons partiels de colle appliqués simultanément sont traités d'une manière différenciée telle qu'au moment du montage du vitrage dans le cadre de baie, ils possèdent les propriétés différentes souhaitées.

Dans une première forme d'exécution de l'invention, le traitement différencié des deux cordons partiels de colle peut consister en ce que les cordons partiels de colle sont faits de masses de colle différentes, mais compatibles, qui sont avantageusement coextrudées à l'aide d'une tête d'extrusion appropriée à cet effet.

Lors de l'exécution de cette forme de réalisation du procédé, le moment auquel les deux colles sont appliquées sur le vitrage est déterminé par la durée limite d'emploi de la masse de colle formant le cordon de colle de montage, pour autant qu'aucune mesure ne soit prise pour empêcher le durcissement. La durée d'emploi limite de la colle de montage ne peut pas être trop longue, parce qu'après la mise en place du vitrage dans la carrosserie du véhicule, ce vitrage doit être fixé en place le plus tôt possible. Pour cette raison, il peut être conseillé de ne procéder à l'application des cordons de colle que relativement peu de temps avant le montage du vitrage dans la carrosserie du véhicule, le délai choisi pouvant varier, d'après la composition et la durée d'emploi limite des deux masses de colle, entre quelques heures et quelques jours.

Alors que, par exemple, pour le cordon partiel durcissant en un temps bref, des colles de polyuréthane à un ou plusieurs composants conviennent, une colle de polyuréthane à un seul composant durcissant au contact de l'humidité peut être utilisée pour le cordon partiel restant adhésif, ce cordon partiel étant recouvert d'une couche empêchant un durcissement prématuré, que l'on enlève avant le montage du vitrage.

Suivant une autre forme d'exécution de l' invention, pour le cordon partiel restant adhésif, on peut utiliser une colle à plusieurs composants, en particulier une colle de polyuréthane à plusieurs composants, qui contient un composant d'amorçage ou de réaction en microcapsules, auquel cas la réaction de durcissement est mise en route par destruction des capsules par chauffage ou exposition à des micro-ondes immédiatement avant le montage du vitrage. De tels systèmes de colle activables appartiennent à l'état connu de la technique.

Selon une autre forme d'exécution de l'invention, on utilise à la fois pour le cordon partiel durcissant en un temps bref et pour le cordon partiel restant adhésif des polyuréthanes à un seul composant qui durcissent par contact avec l'humidité de l'atmosphère, auquel cas le cordon de colle de montage est couvert d'une couche empêchant ou retardant l'accès de la vapeur d'eau. Les cordons partiels différents peuvent, dans ce cas, être faits du même polyuréthane à un seul composant.

Selon une autre forme d'exécution du procédé conforme à l'invention, des cordons partiels de colle possédant des propriétés différentes peuvent également être obtenus par le fait qu'un cordon profilé comprenant les cordons partiels individuels est extrudé en tant que cordon de colle combiné à partir d'une seule masse de colle qui durcit par un apport d'énergie extérieur et que, par un apport localisé d'énergie mécanique ou rayonnante, des zones latérales sélectionnées de la section transversale du cordon de colle combiné sont durcies au préalable, tandis que le cordon partiel situé entre les zones latérales durcies de la section transversale reste adhésif.

D'autres variantes du procédé de l'invention ressortiront des revendications dépendantes et des exemples de réalisation qui sont décrits en détail ci-après avec référence aux dessins.

Dans les dessins annexés montrant des vues fragmentaires de la zone marginale d'un vitrage :
la Fig. 1 illustre une première forme d'exécution d'un vitrage automobile préparé pour le montage;
la Fig. 2 illustre la forme d'exécution représentée sur la Fig. 1 après son montage dans la carrosserie du véhicule;
la Fig. 3 illustre une deuxième forme d'exécution d'un vitrage automobile préparé pour le montage;
la Fig. 4 illustre la forme d'exécution représentée sur la Fig. 3 après son montage dans la carrosserie du véhicule;
les Fig. 5 à 8 illustrent d'autres formes d'exécution d'un vitrage automobile préparé pour le montage, et
la Fig. 9 illustre une tête d'extrusion destinée à extruder et à déposer simultanément deux cordons de colle profilés.

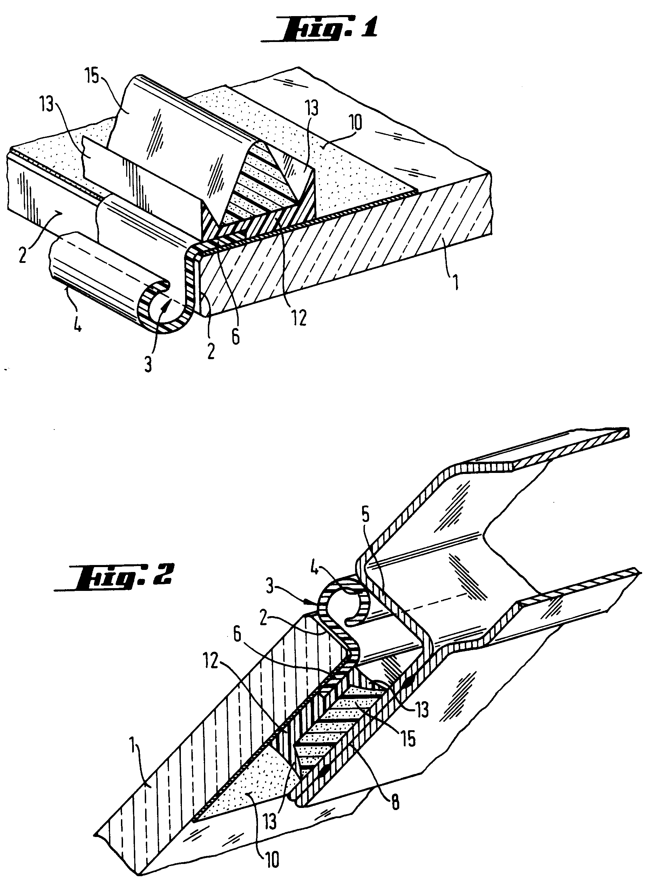

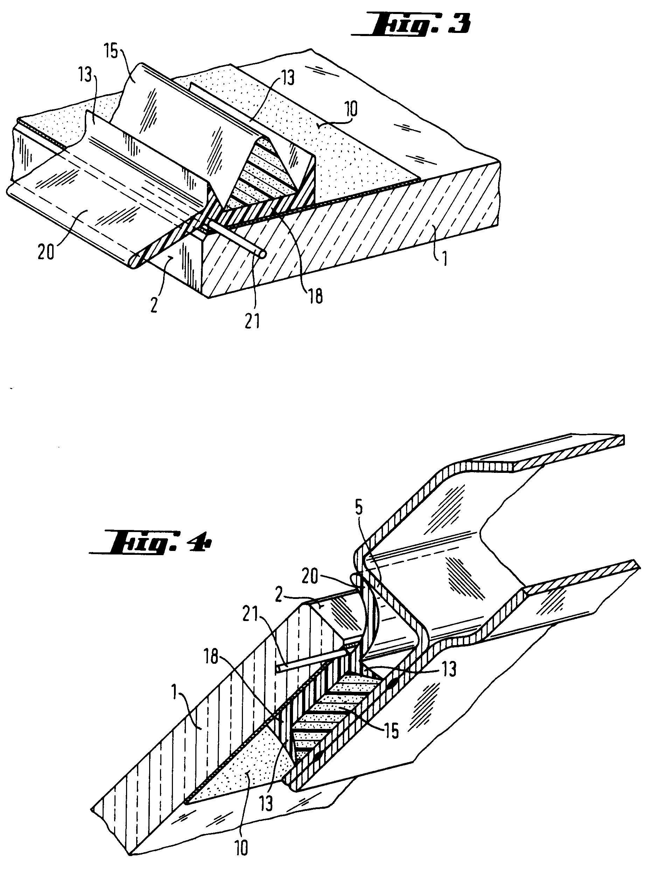

Les Fig. 1 et 2 illustrent une forme d'exécution d'un vitrage automobile 1 prééquipé et prêt au montage, dans laquelle le vitrage 1 est pourvu, le long de son chant périphérique 2, d'une bande profilée 3 en une matière plastique flexible élastomère. Cette bande profilée 3 présente une section 4 essentiellement en forme de boyau qui sert, dans l'état monté du vitrage, à combler l'interstice entre le chant 2 du vitrage et l'aile de contrepartie 5 du cadre de baie. La section coudée 6 de la bande profilée 3 est collée à la face du vitrage 1 tournée vers l'aile de fixation 8 du cadre de baie.

Le vitrage 1 est pourvu, tout autour de sa zone marginale, d'un revêtement opaque 10 qui, d'une part, empêche toute vision de l'extérieur sur la zone collée et, d'autre part, protège les couches de colle contre le rayonnement UV qui, sinon, entraînerait une fragilisation de la colle. Le revêtement 10 est habituellement fait d'un émail à cuire qui a été cuit au cours du chauffage intervenant dans le bombage et/ou dans les opérations de trempe du vitrage.

Lors de la réalisation d'une jonction collée, une préparation appropriée de la surface du verre à laquelle la masse de colle doit adhérer, fait également partie des opérations usuelles. En règle générale, cette préparation de la surface consiste en un traitement à l'aide d'un liquide de nettoyage adapté suivi d'un revêtement au moyen d'une couche de fond adéquate, mais cette préparation du vitrage dépend chaque fois du système de colle utilisé.

Le fait d'installer déjà le cadre profilé de pourtour 3 sur le vitrage avant le montage de ce vitrage dans le cadre de baie a le grand avantage que le montage du vitrage sur la chaîne de montage elle-même est simplifié. Pour atteindre ce but, il faut cependant que le collage de la bande ou du cadre profilé 3 au vitrage soit réalisé lorsque cet élément présente, par exemple, la section transversale en L représentée. Une section transversale en L est cependant nécessaire lorsqu'un montage aérodynamique du vitrage doit être réalisé, c'est-à-dire lorsque aucune pièce d'encadrement ne peut faire saillie sur la surface extérieure du vitrage. Le collage du cadre profilé 3 au vitrage est réalisé à l'aide du cordon de colle profilé 12 qui remplit, par ailleurs, les fonctions connues mentionnées plus haut. Le cordon de colle profilé 12 présente de préférence une section transversale essentiellement en forme de U, les nervures latérales 13 ayant pour tâche, lors de la mise en place du vitrage dans le cadre, de délimiter latéralement le cordon de colle 15.

Le cordon de colle 12 profilé en forme de chenal et le cordon de colle 15 appliqué sur ce cordon de colle 12 sont déposés en une seule et même opération sur le vitrage par coextrusion. Dans ce cas, on utilise pour l'extrusion du cordon de colle 12, une masse de colle qui durcit en un temps relativement bref et qui assure une jonction solide du cadre profilé 3 au vitrage. Pour le cordon de colle 15 qui remplit la fonction de la colle de montage, on utilise une masse de colle qui, d'une part, est compatible avec le cordon de colle 12, c'est-à-dire qui adhère convenablement au cordon de colle 12, et qui, d'autre part, présente une durée d'emploi limite nettement plus longue et reste plastiquement déformable et adhésive pendant un délai prédéfini.

La préparation du vitrage pour le montage s'effectue avantageusement dans un poste de travail précédant la chaîne de montage, dans lequel les vitrages sont préparés de la manière conforme à l'invention, par exemple, un laps de temps de durée déterminée avant l'instant de montage. De cette façon, les vitrages peuvent être préparés, par exemple, quelques heures à plusieurs jours avant leur montage et être fournis à la chaîne de montage au moment où ils y sont nécessaires.

Lorsqu'on utilise pour le cordon de colle profilé 12 et le cordon de colle de montage 15 des masses de colle présentant des durées d'emploi limites différentes, on peut utiliser avec un avantage particulier des colles de polyuréthane à un seul composant ou à plusieurs composants qui se sont avérées satisfaisantes comme colles pour le montage de vitrages automobiles. En particulier dans le cas de colles de polyuréthane à plusieurs composants, il est connu que le temps de durcissement peut être réglé entre de larges limites par diverses mesures. Des compositions de colle appropriées sont décrites, par exemple, dans les documents DE-C-35 45 899 C1, EP-A-0 153 456 A1 et EP-A-0 238 890 A1. A l'aide des colles connues de ce type, il est possible de fabriquer des vitrages préparés pour le montage dans lesquels le cordon de colle 12 est durci, par exemple, après une heure, tandis que la durée d'emploi limite du cordon de colle de montage 15 est d'au moins trois heures.

Une forme d'exécution particulièrement avantageuse du procédé consiste à utiliser, pour le cordon de colle profilé 12, une colle de polyuréthane à un seul ou à plusieurs composants, qui durcit en un temps relativement bref, et de prévoir pour le cordon de colle 15, une colle de polyuréthane à plusieurs composants, contenant un composant d'amorçage ou de réaction sous une forme inactivée, par exemple sous forme de microcapsules, l'activation de ce composant d amorçage ou de réaction s'effectuant par exemple par chauffage ou par irradiation adéquate du cordon de colle 15 ou de l'ensemble du vitrage préparé, immédiatement avant le montage du vitrage.

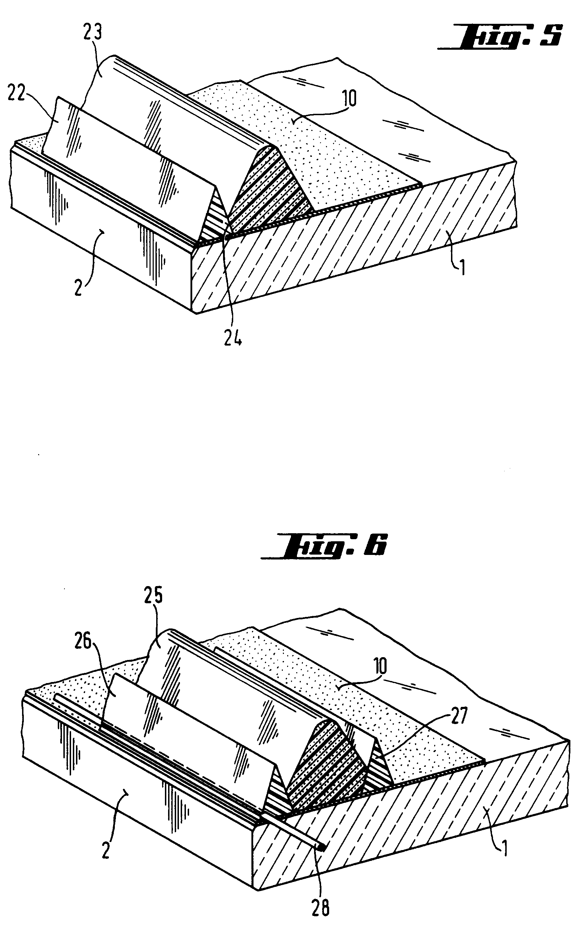

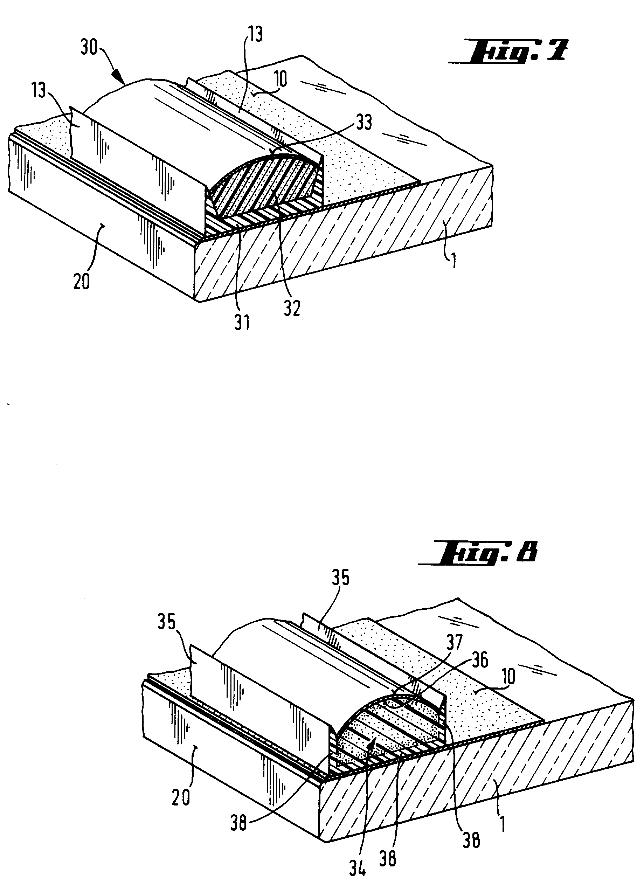

Dans l'exemple de réalisation représenté sur les Fig. 3 et 4, le vitrage 1 est à nouveau pourvu, le long de sa zone marginale, d'un revêtement opaque 10 et, pour le montage dans le cadre de fenêtre du véhicule, il est prééquipé d'un cordon de colle profilé en forme de cadre 18 et simultanément d'un cordon de colle de montage 15. Le cordon de colle profilé 18 présente dans ce cas, comme tel, une lèvre d'étanchéité 20 qui dépasse du pourtour du vitrage et qui a pour fonction, dans l'état monté du vitrage, de ponter ou d'obturer l'interstice séparant la surface du chant 2 et l'aile de contrepartie 5 du cadre de fenêtre. De plus, cette lèvre d'étanchéité 20 a pour fonction, lors de la mise en place du vitrage dans la feuillure du cadre de fenêtre, de servir de lèvre de centrage. Elle assure que la surface périphérique 2 du vitrage se trouve maintenue de tous côtés à la même distance de l'aile 5 du cadre de fenêtre et elle retient le vitrage dans cette position centrée pendant le durcissement de la colle de montage. Cette lèvre d'étanchéité 20 est, dans ce cas, par une configuration adéquate de la buse d'extrusion, formée directement lors de l'extrusion du cordon profilé 18 et fait par conséquent partie de ce cordon profilé 18 lui-même. De plus, le cordon profilé 18 présente à nouveau une section transversale en forme de chenal comportant deux nervures latérales 13 qui délimitent la masse 15 de la colle de montage latéralement.

Le durcissement du cordon profilé 18 doit avoir eu lieu au moment du montage du vitrage. Un durcissement rapide de ce cordon profilé 18 est également nécessaire pour que la lèvre d'étanchéité saillante libre 20 ne se déforme pas. De plus, le temps de durcissement doit être le plus court possible pour assurer la fixation du fil de déchirure 21 qui, lors de l'extrusion du cordon profilé 18, est noyé dans ce cordon de colle. Ce fil de déchirure 21 a pour tâche de faciliter le démontage du vitrage du cadre de fenêtre, parce qu'il sert de fil de séparation pour sectionner le cordon de colle.

La lèvre d'étanchéité 20 peut, le cas échéant, être faite d'une matière différente de celle du reste du cordon profilé 18 et être fabriquée par coextrusion en même temps que le cordon profilé 18. De cette manière, il est possible de fabriquer des lèvres d'étanchéité possédant des propriétés modifiées, qui présentent, par exemple, une stabilité accrue à l'égard des rayons UV et/ou une résistance accrue aux intempéries car, contrairement au reste du cordon profilé 18, la lèvre d'étanchéité est en partie exposée directement aux intempéries.

En même temps que l'extrusion du cordon profilé 18 a lieu l'extrusion du cordon de colle de montage 15 qui est déposé dans le chenal du cordon profilé 18. La masse de colle formant le cordon profilé 18 est à nouveau différente de la masse de colle 15 formant le cordon de colle de montage qui, pour sa part, possède une durée d'emploi limite relativement longue de plusieurs heures à plusieurs jours. Les masses de colle respectives peuvent, en l'occurrence, être les mêmes que celles qui ont été décrites à propos des Fig. 1 et 2.

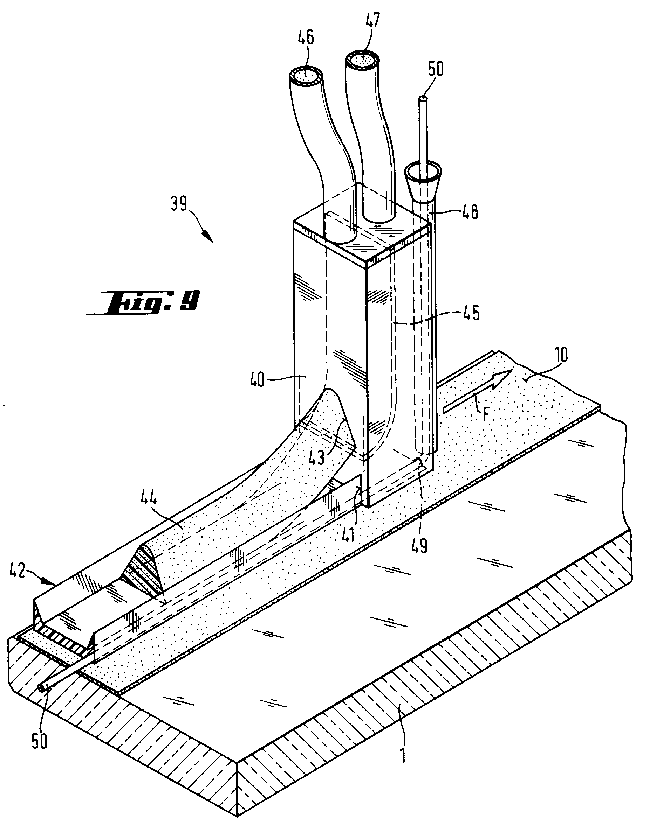

La Fig. 5 illustre une forme d'exécution, dans laquelle, sur le vitrage 1, qui est à nouveau pourvu d'un revêtement opaque en forme de cadre 10, deux cordons partiels de colle sont disposés l'un à côté de l'autre. Le cordon partiel de colle 22 est constitué d'une masse de colle durcissant en un temps relativement bref. Il présente une section transversale sensiblement triangulaire. Le cordon de colle durci 22 sert, lors de la mise en place du vitrage, à fixer l'espacement entre le vitrage et l'aile de fixation du cadre de baie et, en outre, à empêcher que la masse du cordon de colle plastiquement déformable et restant adhésif 23 s'infiltre dans l'interstice entre la surface du chant 2 et l'aile de contrepartie du cadre de baie. De plus, le cordon de colle durci 22 peut servir, par exemple, à fixer un fil de déchirure ou d'autres pièces du cadre de structure. Le cordon partiel 23 est constitué de la masse de colle restant adhésive. Il est appliqué dans ce cas directement sur le vitrage ou sur le revêtement 10 et ne se raccorde que latéralement dans la zone de la surface de contact 24 au cordon de colle durci 22.

La forme d'exécution illustrée sur la Fig. 6 est également caractérisée en ce que le cordon de colle restant adhésif 25 est directement en contact avec le revêtement 10 ou avec la surface du verre et n'est limité que latéralement par deux cordons de colle durcis 26 et 27. Les cordons de colle durcis 26 et 27 jouent à nouveau le rôle de nervures de délimitation pour le cordon de colle de montage 25, ainsi que de cales d'espacement. Un fil de déchirure 28 est, en outre, disposé dans le cordon de colle durci 26.

Dans la forme d'exécution de l'invention illustrée sur la Fig. 7, le vitrage 1 est pourvu d'un revêtement opaque 10 sur lequel est disposé un profilé composite extrudé 30. Ce profilé composite 30 est à nouveau constitué d'un cordon de colle de section en U, 31, fait d'une masse de colle durcissant assez rapidement, ainsi que d'un cordon de colle de montage 32 disposé dans le chenal formé par le cordon de colle 31 et constitué d'une masse de colle durcissant plus lentement. Le cordon de colle de montage 32 est constitué dans ce cas d'un polyuréthane à un seul composant qui durcit par réaction avec l'humidité de l'atmosphère ambiante. La surface libre du cordon de colle 32 est recouverte par une pellicule 33 qui protège la surface du cordon de colle 32 contre un contact direct avec l'atmosphère ambiante. Ceci empêche le contact de la surface du cordon de colle 32 avec l'humidité de l'air, ou retarde plus ou moins fortement le contact avec cette humidité de l'air. Le délai entre la préparation du vitrage et le montage de ce vitrage peut, de cette façon, être nettement allongé.

Immédiatement avant le montage du vitrage, on enlève la pellicule 33 et on dégage ainsi la surface du cordon de colle de montage 32.

La pellicule 33 est faite, par exemple, d'un polymère qui se prête à la coulée ou à l'extrusion. Il est appliqué en même temps ou immédiatement après la coextrusion des deux cordons de colle 31 et 32 sur le cordon de colle 32 et ce en une couche cohérente qui va d'une nervure latérale 13 jusqu'à l'autre nervure latérale 13. La matière constitutive de la pellicule 33 et son épaisseur doivent être choisies telles que la pellicule 33 puisse être arrachée d'une seule pièce du cordon de colle 32 et que les propriétés adhésives du cordon de colle 32 ne soient pas défavorablement influencées.

La pellicule 33 peut également, par exemple, être faite d'une matière inorganique pouvant être appliquée à l'état coulant, qui durcit ou cristallise en un revêtement pelliculaire fermé et qui n'exige aucune opération supplémentaire pour l'enlèvement de la pellicule lors du montage du vitrage, mais libère d'elle-même la couche de colle de montage. Lorsque cette couche est faite, par exemple, d'une matière inorganique fragile, qui est soumise à des tensions internes, la pellicule s'arrache sous l'effet des sollicitations de pression exercées lors du montage du vitrage et se divise en petits fragments, de sorte que la surface du cordon de colle de montage est libérée. Les fragments sont, pour leur part, mouillés par la masse de colle et noyés dans celle-ci et ils n'entravent pas l'opération de collage. Le cas échéant, des mesures adéquates, comme une irradiation ou des mesures analogues, permettent d'assurer que la fragilisation nécessaire de la pellicule ne se produise que peu avant le montage du vitrage.

Une forme d'exécution particulièrement économique du procédé conforme à l'invention est illustrée sur la Fig. 8. Dans ce cas, on ne procède pas, comme décrit plus haut, à la coextrusion de deux masses de colle différentes pour former un profilé composite, mais on extrude et on dépose sur le vitrage 1 ou sur le revêtement 10 appliqué sur le vitrage 1 un cordon de colle profilé 34, qui est homogène et est fait d'un polyuréthane à un seul composant durcissant au contact de l'humidité atmosphérique. La section transversale du cordon de colle 34 correspond sensiblement à la section transversale d'un profilé composite formé d'un profilé de base de section en U disposé sur le vitrage et d'un cordon de colle de montage disposé dans le profilé de base, le côté supérieur du cordon de colle 34 étant profilé d'une manière telle que soient formées deux lèvres longitudinales latérales 35 entre lesquelles la masse de colle forme un renflement 36.

La surface du renflement 36 du cordon de colle 34 est à nouveau recouverte d'une pellicule 37. La pellicule 37 est constituée de l'une des matières à très faible perméabilité à la vapeur d'eau décrites dans l'exemple précédent. Elle protège la surface recouverte contre l'accès de la vapeur d'eau. De cette façon, la zone comprise entre les lèvres longitudinales 35 en dessous de la pellicule 37 reste plastiquement déformable et adhésive. L'humidité ambiante a par contre librement accès aux surfaces non protégées du cordon de colle 34. Elle assure que le cordon de colle 34 durcisse dans une zone marginale 38 de section transversale en U, tandis que dans la zone couverte par la pellicule 37, il reste plastiquement déformable et adhésif.

La Fig. 9 illustre finalement une tête d'extrusion convenant, par exemple, pour la coextrusion de deux masses de colle différentes et pour leur dépôt sur le vitrage 1 ou sur le revêtement 10 disposé dans la zone marginale du vitrage. La buse d'extrusion 39 proprement dite est constituée d'un tuyau carré 40 ouvert à sa partie inférieure, en contact avec le vitrage, et qui est déplacé dans le sens de la flèche F sur le vitrage 1. Le tuyau carré 40 présente, du côté arrière vu dans le sens du déplacement, un orifice d'ajutage inférieur 41 dont la forme correspond à la section souhaitée du cordon profilé 42. Au-dessus de l'orifice d'ajutage 41 est prévu un second orifice d'ajutage 43. La forme de cet orifice d'ajutage 43 correspond à la section transversale souhaitée du cordon de colle 44 qui sert de cordon de colle de montage. Le tuyau carré 40 est divisé intérieurement par une cloison 45 en deux espaces séparés l'un de l'autre, dont l'un est en communication avec l'orifice d'ajutage 43 et est alimenté par le tube d'alimentation 46 à l'aide de la masse de colle destinée au cordon de colle de montage 44, tandis que l'autre est en communication avec l'orifice d'ajutage 41 et est alimenté par le tube d'alimentation 47 à l'aide de la masse de colle qui forme le cordon profile 42.

De plus, un tube de guidage coaxial 48 est prévu sur le tuyau carré 40 à l'avant de celui-ci et est utilisé pour amener, à une ouverture 49 prévue au bas de la paroi antérieure du tuyau carré, un câble 50 en une matière fibreuse très résistante. Ce câble 50 est ainsi noyé dans le cordon profilé 42 et sert de câble de déchirure.

Lorsque les formes d'exécution des Fig. 7, 8 doivent être réalisées, la buse d'extrusion 39 est, en outre, pourvue d'un autre orifice d'ajutage et d'un dispositif d'alimentation correspondant qui permettent d'appliquer la pellicule de recouvrement sur le cordon de colle de montage.

## Revendications

1. Procédé de préparation d'un vitrage, en particulier un vitrage automobile, en vue de son montage dans un cadre de baie par collage de la zone marginale du vitrage à une aile (8) de fixation du cadre de baie, dans lequel au moins deux cordons partiels de colle de section transversale calibrée sont déposés sur le vitrage, chaque fois par extrusion d'une masse de colle à l'aide d'une buse d'extrusion (39) calibrée, l'un des cordons partiels (12, 18, 22, 26, 27, 31, 35) étant déjà durci lors de la mise en place du vitrage dans le cadre de baie et un autre cordon partiel (15, 23, 25, 32, 36) formant le cordon de colle actif pour la fixation du vitrage dans le cadre de baie, caractérisé en ce que les cordons partiels de colle sont déposés sur le vitrage au cours d'une seule opération d'extrusion, et qu'un traitement différencié des deux cordons partiels de colle garantit qu'au moins un cordon partiel durcisse en un temps aussi bref que possible, préalablement au montage du vitrage (1) dans la baie, tandis qu'un autre cordon partiel (cordon de colle de fixation) reste plastiquement déformable et adhésif jusqu'à la mise en place du vitrage (1) dans la baie.

2. Procédé suivant la revendication 1, caractérisé en ce que les cordons partiels de colle sont coextrudés à l'aide d'une seule tête d'extrusion adéquate (39).

3. Procédé suivant la revendication 1 ou 2, caractérisé en ce que les cordons partiels de colle sont formés à partir de masses de colles différentes, mais compatibles.

4. Procédé suivant la revendication 3, caractérisé en ce qu'une colle de polyuréthane à un ou à plusieurs composants est utilisée pour le cordon partiel (12, 18, 22, 26, 27, 31, 35) durcissant en un temps bref.

5. Procédé suivant la revendication 3 ou 4, caractérisé en ce que pour le cordon partiel (32) restant adhésif, on utilise une colle de polyuréthane à un seul composant durcissant à l'humidité et on couvre ce cordon partiel extrudé à l'aide d'une couche (33) empêchant tout durcissement prématuré, que l'on enlève avant la mise en place du vitrage.

6. Procédé suivant la revendication 3, caractérisé en ce qu'à titre de masses de colle, on utilise des polyuréthanes à deux ou à plus de deux composants, dont la durée d'emploi limite est réglée différemment par modification des proportions du mélange des composants individuels.

7. Procédé suivant la revendication 3 ou 4, caractérisé en ce que pour le cordon partiel (15, 23, 25, 32, 36) restant adhésif, on utilise une colle de polyuréthane à plusieurs composants, qui contient un composant d'amorçage ou de réaction en microcapsules, auquel cas la réaction de durcissement est mise en route par destruction des capsules par chauffage ou exposition à des micro-ondes immédiatement avant le montage du vitrage.

8. Procédé suivant la revendication 1 ou 2, caractérisé en ce qu'on utilise, à la fois pour le cordon partiel (35) durcissant en un temps bref et pour le cordon partiel (36) restant adhésif, des polyuréthanes à un seul composant qui durcissent par contact avec l'humidité de l'atmposphère, auquel cas le cordon de colle de montage est recouvert par une couche (37) empêchant ou retardant l'accès de la vapeur d'eau.

9. Procédé suivant la revendication 8, caractérisé en ce que les cordons partiels sont faits du même polyuréthane à un seul composant.

10. Procédé suivant la revendication 9, caractérisé en ce qu'un cordon profité comprenant les cordons partiels individuels est extrudé sous la forme d'un cordon de colle combiné, auquel cas une partie en forme de U de la section transversale du cordon durcit par contact avec l'atmosphère et la partie médiane du cordon de colle, située entre les ailes latérales (35) du cordon profilé, est recouverte d'une couche (37) étanche à la vapeur d'eau.

11. Procédé suivant la revendication 1 ou 2, caractérisé en ce qu'un cordon profité comprenant les cordons partiels individuels est extrudé en tant que cordon de colle combiné à partir d'une seule masse de colle qui durcit par un apport d'énergie extérieur et que, par un apport localisé d'énergie mécanique ou rayonnante, des zones latérales sélectionnées de la section transversale du cordon de colle combiné sont durcies au préalable, tandis que le cordon partiel situé entre les zones latérales durcies de la section transversale reste adhésif.

12. Procédé suivant l'une quelconque des revendications 1 à 11, caractérisé en ce que le cordon partiel restant adhésif est disposé sur le cordon partiel durcissant en un temps bref.

13. Procédé suivant l'une quelconque des revendications 1 à 11, caractérisé en ce qu'un ou plusieurs cordons partiels durcissant en un temps bref sont déposés sur le vitrage sous la forme de nervures (22, 26, 27) de délimitation latérales et/ou de cales d'écartement par rapport à l'aile de fixation et un cordon partiel restant adhésif (23, 25) est disposé à côté du cordon partiel durcissant en un temps bref ou entre deux cordons partiels durcissant en un temps bref.

14. Procédé suivant l'une quelconque des revendications 1 à 13, caractérisé en ce que, pendant l'extrusion même du cordon partiel durcissant en un temps bref, est mis en place dans ce cordon partiel, un câble flexible (21, 28, 50) servant en cas de besoin de fil de déchirure pour sectionner la jonction collée.

15. Procédé suivant les revendications 5, 8, 9 ou 10 caractérisé en ce que le cordon partiel restant adhésif est recouvert d'une couche (33, 37) d'une matière fragile empêchant un durcissement prématuré, qui, sous l'effet des sollicitations de pression exercées lors du montage du vitrage, se brise en petits fragments et, le cas échéant, se détache dudit cordon adhésif.

16. Procédé suivant l'une quelconque des revendications 1 à 15, caractérisé en ce que le cordon partiel durcissant en un temps bref comporte une lèvre (20) d'étanchéité qui en fait partie intégrante.

17. Procédé selon la revendication 16, caractérisé en ce que la matière constituant la lèvre (20) lui fournit une résistance accrue aux U.V. ou aux intempéries.

18. Procédé selon la revendication 16 ou 17, caractérisé en ce que la nature de la matière dont est constituée la lèvre (20) permet un durcissement rapide et évite sa déformation.

19. Procédé selon l'une des revendications 16 à 18, caractérisé en ce qu'en même temps que le cordon (18) partiel durcissant en un temps bref, sont coextrudées les lèvres (20) d'étanchéité saillantes sur le pourtour du vitrage, soit à partir de matériaux plastiques extrudables différents, soit à partir d'un même matériau plastique extrudable.

## Claims

1. Process for the preparation of a pane, especially an automobile pane, with a view to its being mounted in a frame of an opening by gluing of the marginal zone of the pane to a fixing flange (8) of the opening frame, in which at least two partial cords of adhesive of calibrated cross-section are deposited on the pane, each by extrusion of an adhesive mass by means of a calibrated extrusion nozzle (39), the one of the partial cords (12, 18, 22, 26, 27, 31, 35) being already hardened when the pane is positioned in the frame of the opening and another partial cord (15, 23, 25, 32, 36) forming the active cord of adhesive for fixing the pane in the frame of the opening, characterized in that the partial cords of adhesive are deposited on the pane during a single extrusion operation, and that a differentiated treatment of the two partial cords of adhesive ensures that at least one partial cord hardens in as short a time as possible, prior to the mounting of the pane (1) in the opening, while another partial cord (fixing adhesive cord) remains plastically deformable and adhesive until the pane (1) is positioned in the opening.

2. Process according to Claim 1, characterized in that the partial cords of adhesive are coextruded by means of a single appropriate extrusion head (39).

3. Process according to Claim 1 or 2, characterized in that the partial cords of adhesive are formed from masses of different, but compatible adhesives.

4. Process according to Claim 3, characterized in that a single-component or multi-component polyurethane adhesive is used for the partial cord (12, 18, 22, 26, 27, 31, 35) which hardens in a short time.

5. Process according to Claim 3 or 4, characterized in that, for the partial cord (32) that remains adhesive, a single-component polyurethane adhesive that hardens with humidity is used and that this extruded partial cord is covered with a film (33) preventing any premature hardening, which is removed before the positioning of the pane.

6. Process according to Claim 3, characterized in that, for the adhesive materials, polyurethanes comprising two or more components are used, the limiting duration of use of which is adjusted differently by modifying the proportions of the mixture of the individual components.

7. Process according to Claim 3 or 4, characterized in that, for the partial cord (15, 23, 25, 32, 36) that remains adhesive, a multi-component polyurethane adhesive is used, which contains a initiating or reaction component in microcapsules, the hardening reaction being initiated by destruction of the capsules by heating or exposure to microwaves immediately before the installation of the pane.

8. Process according to Claim 1 or 2, characterized in that there are used, both for the rapid-hardening partial cord (35) and for the partial cord (36) which remains adhesive, single-component polyurethanes which harden by contact with the atmospheric humidity, the mounting adhesive cord being covered with a film (37) which prevents or retards the access of water vapour.

9. Process according to Claim 8, characterized in that the partial cords are made of the same single-component polyurethane.

10. Process according to Claim 9, characterized in that a profiled cord comprising the individual partial cords is extruded in the form of a combined cord of adhesive, a U-shaped portion of the cross-section of the cord hardening by contact with the atmosphere and the median portion of the adhesive cord, situated between the lateral flanges (35) of the profiled cord, being covered with a film (37) which is sealing against water vapour.

11. process according to Claim 1 or 2, characterized in that a profiled cord comprising the individual partial cords is extruded as a combined cord of adhesive from a single mass of adhesive that hardens by an application of external energy and that, by a localized application of mechanical or radiation energy, selected lateral zones of the cross-section of the combined adhesive cord are hardened in advance, whereas the partial cord situated between the hardened lateral zones of the cross-section remains adhesive.

12. Process according to any one of Claims 1 to 11, characterized in that the partial cord that remains adhesive is disposed on the rapid-hardening partial cord.

13. Process according to any one of Claims 1 to 11, characterized in that one or more rapid-hardening partial cords are deposited on the pane in the form of ribs (22, 26, 27) forming lateral boundaries and/or separating wedges with respect to the fixing flange and a partial cord that remains adhesive (23, 25) is disposed alongside the rapid-hardening cord or between two rapid-hardening cords.

14. Process according to any one of Claims 1 to 13, characterized in that, during the extrusion itself of the rapid-hardening partial cord, a flexible cable (21, 28, 50) is positioned in this partial cord, this cable being intended to serve, if required, as a tearing wire for cutting the glued joint.

15. Process according to Claims 5, 8, 9 or 10, characterized in that the partial cord that remains adhesive is covered with a film (33, 37) of a brittle material preventing premature hardening which, under the effect of the pressure forces exerted during the installation of the pane, breaks up into small fragments and may become detached from said adhesive cord.

16. Process according to any one of Claims 1 to 15, characterized in that the rapid-hardening partial cord comprises a sealing lip (20) forming an integral part of it.

17. Process according to Claim 16, characterized in that the material forming the lip (20) gives it an increased resistance to UV or weathering.

18. Process according to Claim 16 or 17, characterized in that the nature of the material of which the lip (20) is formed makes possible rapid hardening and prevents its deformation.

19. Process according to one of Claims 16 to 18, characterized in that, simultaneously with the extrusion of the rapid-hardening partial cord (18), projecting sealing lips (20) are coextruded around the periphery of the pane, either from different extrudable plastics materials or from a single extrudable plastics material.

## Patentansprüche

1. Verfahren zum vorrüsten einer Glasscheibe, insbesondere einer Autoglasscheibe, für den Einbau in einem Fensterrahmen durch Verklebung des Randbereichs der Glasscheibe mit dem Befestigungsflansch (8) des Fensterrahmens, bei dem auf der Glasscheibe wenigstens zwei Teilstränge des Klebers mit kalibriertem Querschnitt jeweils durch Extrusion einer Klebermasse mit Hilfe einer kalibrierten Extrusionsdüse (39) abgelegt werden, von denen ein Teilstrang (12,18,22,26,27,31,35) beim Einsetzen der Glasscheibe in den Fensterrahmen bereits ausgehärtet ist und ein anderer Teilstrang (15,23,25,32,36) den für die Befestigung der Glasscheibe im Fensterrahmen aktiven Kleberstrang bildet,
**dadurch gekennzeichnet,** daß die Kleber-Teilstränge in einem einzigen Extrusionsvorgang auf der Glasscheibe abgelegt werden, und daß durch eine unterschiedliche Behandlung der beiden Kleber-Teilstränge sichergestellt wird, daß wenigstens ein Teilstrang vor der Montage der Glasscheibe (1) in der Fensteröffnung in möglichst kurzer Zeit aushärtet, während ein anderer Teilstrang (Montage-Kleberstrang) bis zum Einsetzen der Glasscheibe (1) in die Fensteröffnung plastisch verformbar und klebeaktiv bleibt.

2. Verfahren nach Anspruch 1, dadurch gekennzeichnet, daß die Kleber-Teilstränge mit Hilfe eines einzigen geeigneten Extrusionskopfs (39) koextrudiert werden.

3. Verfahren nach Anspruch 1 oder 2, dadurch gekennzeichnet, daß die Kleber-Teilstränge aus unterschiedlichen, jedoch kompatiblen Klebermassen bestehen.

4. Verfahren nach Anspruch 3, dadurch gekennzeichnet, daß für den in kurzer Zeit aushärtenden Teilstrang (12,18,22,26,27,31,35) ein Ein- oder MehrkomponentenPolyurethan-Kleber verwendet wird.

5. Verfahren nach Anspruch 3 oder 4, dadurch gekennzeichnet, daß für den klebeaktiv bleibenden Teilstrang (32) ein feuchtigkeitshärtender Einkomponenten-Polyurethan-Kleber verwendet und dieser extrudierte Teilstrang durch eine die vorzeitige Aushärtung verhindernde Schicht (33) abgedeckt wird, die vor dem Einsetzen der Glasscheibe entfernt wird.

6. Verfahren nach Anspruch 3, dadurch gekennzeichnet, daß als Klebermassen Zwei- oder Mehrkomponenten-Polyurethane verwendet werden, deren begrenzte Topfzeit unterschiedlich durch Variation des Mischungsverhältnisses der einzelnen Komponenten eingestellt wird.

7. Verfahren nach Anspruch 3 oder 4, dadurch gekennzeichnet, daß für den klebeaktiv bleibenden Teilstrang (15,23,25,32,36) ein Mehrkomponenten-Polyurethan-Kleber verwendet wird, der eine Starter- oder Reaktionskomponente in Mikrokapseln enthält, wobei die Aushärtereaktion durch Zerstörung der Kapseln durch Aufheizen oder Bestrahlung mit Mikrowellen unmittelbar vor der Montage der Glasscheibe in Gang gebracht wird.

8. Verfahren nach Anspruch 1 oder 2, dadurch gekennzeichnet, daß sowohl für den in kurzer Zeit aushärtenden Teilstrang (35) als auch für den klebeaktiv bleibenden Teilstrang (36) Einkomponenten-Polyurethane verwendet werden, die durch Kontakt mit der Feuchtigkeit der Atmosphäre aushärten, wobei der Montage-Kleberstrang durch eine den Zutritt von Wasserdampf verhindernde oder verzögernde Schicht (37) abgedeckt wird.

9. Verfahren nach Anspruch 8, dadurch gekennzeichnet, daß die Teilstränge aus demselben Einkomponenten-Polyurethan bestehen.

10. Verfahren nach Anspruch 9, dadurch gekennzeichnet, daß ein die Teilstränge umfassender Profilstrang als kombinierter Kleberstrang extrudiert wird, wobei ein U-förmiger Teil des Strangquerschnittes durch Kontakt mit der Atmosphäre aushärtet und der zwischen den seitlichen Schenkein (35) des Profilstrangs liegende Mittelteil des profilierten Kleberstrangs mit einer wasserdampfdichten Schicht (37) abgedeckt wird.

11. Verfahren nach Anspruch 1 oder 2, dadurch gekennzeichnet, daß ein die einzelnen Teilstränge aufweisender Profilstrang als kombinierter Kleberstrang aus einer einzigen Klebermasse extrudiert wird, die durch äußere Energiezufuhr aushärtet, und daS durch lokalisierte Zufuhr von mechanischer oder Strahlungs-Energie ausgewählte seitliche Querschnittsbereiche des kombinierten Kleberstrangs vorzeitig aushärten, während der zwischen den seitlichen Querschnittsbereichen liegende Teilstrang klebeaktiv bleibt.

12. Verfahren nach beliebigen der Ansprüche 1 bis 11, dadurch gekennzeichnet, daß der klebeaktiv bleibende Teilstrang auf dem in kurzer Zeit aushärtenden Teilstrang angeordnet wird.

13. Verfahren nach einem beliebigen der Ansprüche 1 bis 11, dadurch gekennzeichnet, daß ein oder mehrere in kurzer Zeit aushärtende Teilstränge auf der Glasscheibe als seitliche Begrenzungsstege (22,26,27) und/oder als Abstandshalter in Bezug auf den Befestigungsflansch abgelegt werden und ein klebeaktiv bleibender Teilstrang (23,25) neben dem in kurzer Zeit aushärtenden Teilstrang oder zwischen zwei in kurzer Zeit aushärtende Teilstränge angeordnet wird.

14. Verfahren nach einem der Ansprüche 1 bis 13, dadurch gekennzeichnet, daß während der Extrusion des in kurzer Zeit aushärtenden Teilstrangs in diesen Teilstrang eine flexible Schnur (21,28,50) eingelegt wird, die im Bedarfsfall zum Durchtrennen der Klebeverbindung dient.

15. Verfahren nach den Ansprüchen 5, 8, 9 oder 10, dadurch gekennzeichnet, daß der klebeaktiv bleibende Teilstrang durch eine Schicht (33,37) aus einem ein vorzeitiges Aushärten verhindernden zerbrechlichen Material abgedeckt wird, das durch die beim Einbau der Glasscheibe ausgeübte Druckbelastung in kleine Bruchstücke zerbricht und sich gegebenenfalls von dem Kleberstrang löst.

16. Verfahren nach einem der Ansprüche 1 bis 15, dadurch gekennzeichnet, daß der in kurzer Zeit aushärtende Teilstrang eine angeformte Dichtlippe (20) umfaßt.

17. Verfahren nach Anspruch 16, dadurch gekennzeichnet, daß das die Lippe (20) bildende Material eine erhöhte UV-Beständigkeit oder Witterungsbeständigkeit aufweist.

18. Verfahren nach Anspruch 16 oder 17, dadurch gekennzeichnet, daß das Material, das die Lippe (20) bildet, ein schnelles Aushärten ermöglicht und ihre Verformung verhindert.

19. Verfahren nach einem der Ansprüche 16 bis 18, dadurch gekennzeichnet, daß gleichzeitig mit dem in kurzer Zeit aushärtenden Teilstrang (18) über den Scheibenrand überstehende Dichtlippen (20) aus einem verschiedenen oder gleichen extrudierbaren Kunststoff koextrudiert werden.
